# EUROPEAN PATENT APPLICATION

(11) **EP 1 739 340 A2**
(43) Date of publication of application: **03.01.2007**
(21) Application number: 06252553.0
(22) Date of filing: 16.05.2006
(51) Int. Cl.: F16M 13/02

(54) **A system for mounting a display screen**

(30) Priority: 23.05.2005 GB 0510479
(71) Applicant: Komfort Workspace plc, Sheffield South Yorkshire S6 2LW (GB)
(72) Inventor: Wright, Malcolm, West Portway Andover Hampshire SP10 3LF (GB); Walker, Henry, West Portway Andover Hampshire SP10 3LF (GB); Pollard, Tom, West Portway Andover Hampshire SP10 3LF (GB)
(74) Representative: Evans, Claire

(57) **Abstract**

A system for mounting a display screen, the system comprising a frame (1), means for mounting the display screen in the frame and means (5) for mounting the frame (1) in an aperture (6).

## Description

The invention relates to a system for mounting a display screen such as a flat screen for a computer, particularly a system for mounting a display screen on a surface such as a panel.

A known system for mounting a display screen on a surface consists of a bracket attached to the rear of the display screen, which can be screwed to the surface.

A problem with the known system is that it is relatively easy to steal the display screen as it may be unscrewed from the surface to which it is attached.

It is an object of the invention to seek to mitigate this problem.

Accordingly, the invention provides a system for mounting a display screen, the system comprising a frame, means for mounting the display screen in the frame and means for mounting the frame in an aperture.

By placing the display screen in a frame, and then mounting the frame in an aperture, it becomes possible to prevent or hinder access to the means for mounting the display screen and frame, thereby making it more difficult to steal the display screen.

The means for mounting the frame may comprise one or more security fixings. Such fixings cannot be removed by a screwdriver, but must be removed by a special tool. By using a security fixing, it becomes even more difficult to steal the display screen.

The means for mounting the display screen may comprise a pivot so that the display screen can be tilted when attached to the frame. This allows the display screen to be positioned in an optimal viewing position.

When the frame is mounted in the aperture, the means for mounting the frame may be accessible only when the display screen is tilted. If the means for mounting the frame are accessible only when the display screen is tilted, it will still be possible to access these mounting means when installing the mounting system, but they will not be readily seen once installation has taken place. This will act as a deterrent to theft.

When the frame is mounted in the aperture, the means for mounting the display screen may be inaccessible when the display screen is tilted. This will mean that it will only be possible to remove the display screen from the frame by levering it from the frame, which is likely to break the display screen.

The frame may comprise a border, which extends outwardly from one edge of the frame.

The border may be of such a size that it covers any exposed regions of the aperture when the frame is mounted in the aperture. This will improve the appearance of the mounting system, and will make it impossible to insert a tool between the edge of the aperture and the frame to lever the frame out of the aperture.

The display screen may be a flat screen.

The invention will now be illustrated by way of example with reference to the following drawings of which:

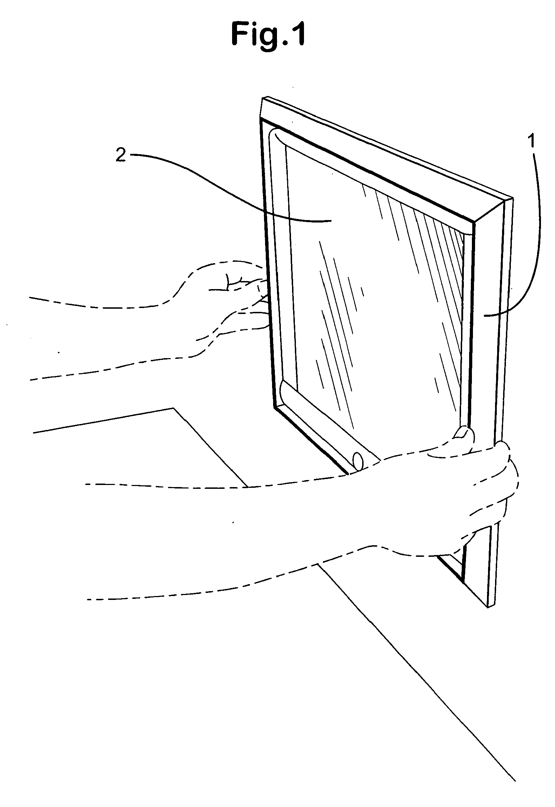

Figure 1 shows a system for mounting a display screen according to the invention;

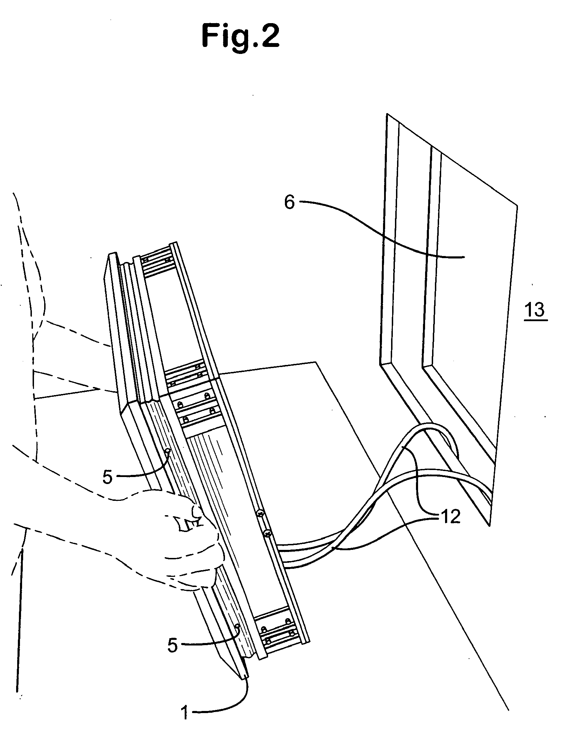

Figure 2 shows the system of Figure 1 being mounted in an aperture;

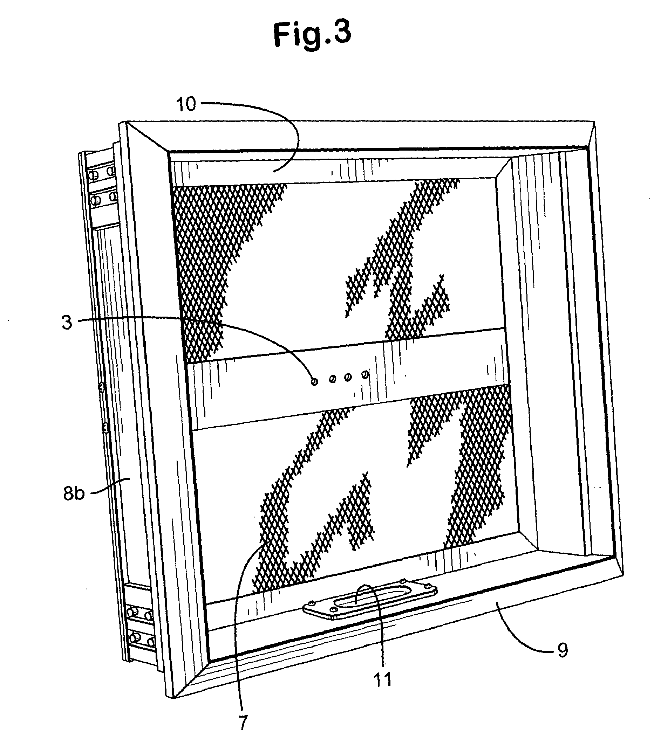

Figure 3 shows a front view of the frame shown in Figure 1;

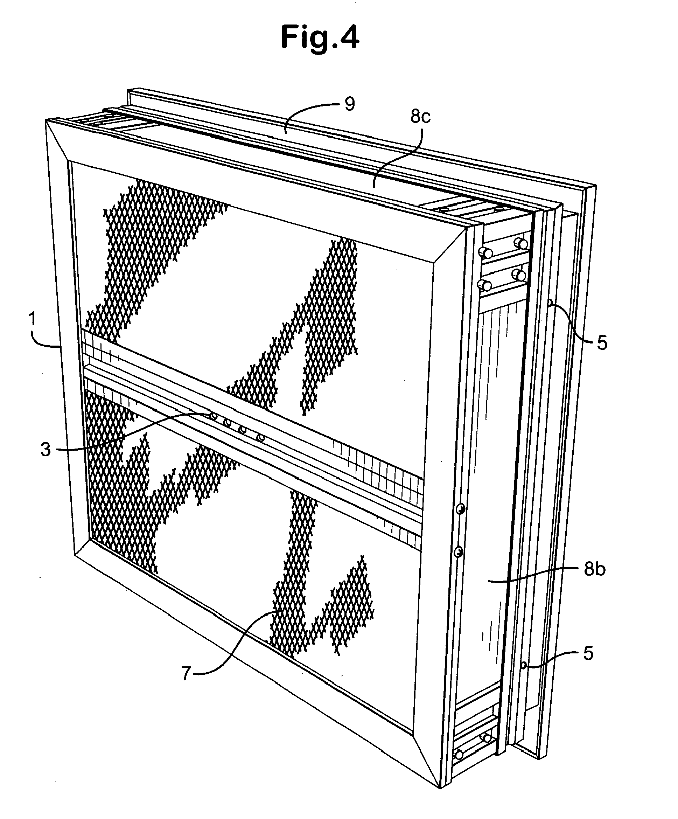

Figure 4 shows a rear view of the frame shown in Figure 1;

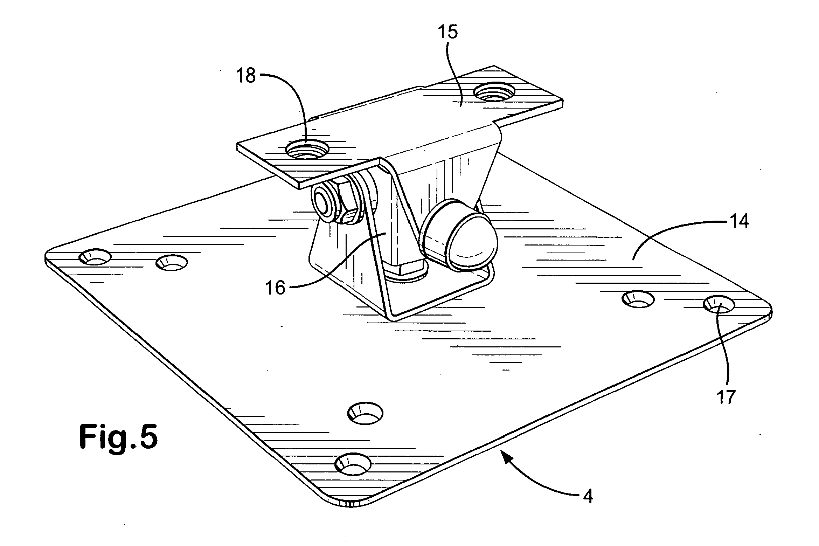

Figure 5 shows a mounting means for use in the system of Figure 1; and
Figure 6 shows the mounting means of Figure 5 mounted on a display screen.

The system for mounting a display screen shown in the drawings comprises a frame 1 for receiving a display screen 2, means 3,4 for mounting the display screen 2 in the frame 1, and means 5 for mounting the frame 1 in an aperture 6.

The frame 1 comprises a base 7, four walls 8a, 8b, 8c, 8d and a border 9, which extends outwardly from the upper edge of the four walls 8a-d. The four walls 8a-d define an opening 10 which is just large enough to receive the display screen 2. One of the walls 8a includes an aperture 11 through which can be passed any cables 12 attached to the display screen 2. The walls 8b, 8d on either side of that wall 8a each include two holes 5 to allow the frame 1 to be mounted in the aperture 6. The base 7 is perforated in order to allow ventilation to reach the display screen 2, and includes four holes 3 to allow the display screen 2 to be attached to the frame 1. The frame 1 is made of metal, but it may be made of any suitable material.

The aperture 6 is positioned in a panel 13, and should be larger than the frame 1 so that the frame 1 can be mounted in the aperture 6, but smaller than the border 9 of the frame 1 so that the border 9 covers any exposed regions of the aperture 6 when the frame 1 is mounted in the aperture 6.

The display screen 2 is attached to the frame 1 by a bracket 4, which comprises two plates 14, 15 separated by a universal joint 16. The first plate 14 includes a number of holes 17 to allow the plate 14 to be attached to the display screen 2. The second plate 15 includes two holes 18 to allow the plate 15 to be attached to the frame 1.

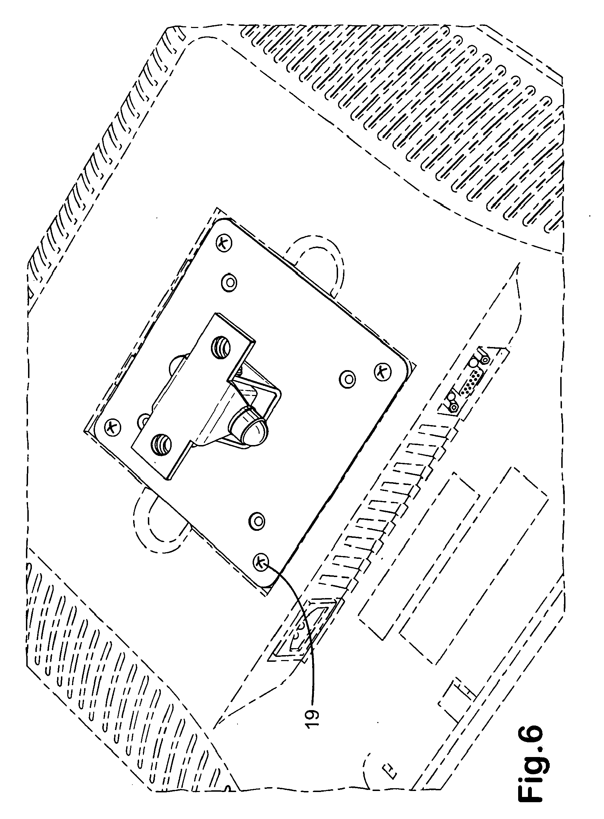

In use, the first plate 14 of the bracket 4 is attached to the rear of the display screen 2 with four fixings 19 as shown in Figure 6. Two screws (not shown) are passed through the two holes 18 in the second plate 15. The display screen 2 is placed in the frame 1, the cables 12 being passed through the aperture 11 in wall 8a, and the two screws being passed through two of the holes 3 in the base 7 of the frame 1. Two nuts (not shown) are used to secure the bracket 4 to the frame 1. The frame 1 is then inserted into the aperture 6. The display screen 2 is tilted to expose the two holes 5 in the opposite walls 8b, 8d of the frame 1. Four security fixings (not shown) are then used to attach the frame 1 to the aperture 6. The security fixings are of a known type, which cannot be removed unless a special tool is used.

Once mounted, the security fixings cannot be readily seen as they can only be accessed when the display screen 2 is tilted. It is therefore difficult for the casual user to ascertain how the display screen 2 is mounted in the frame 1. Even if a user does find the security fixings, he will not be able to remove them unless he has the special tool. Accordingly, the display screen 2 cannot be removed unless it is levered from the frame 1 which is likely to break the display screen 2.

## Claims

1. A system for mounting a display screen, the system comprising a frame, means for mounting the display screen in the frame and means for mounting the frame in an aperture.

2. A system according to claim 1, wherein the means for mounting the frame comprises one or more security fixings.

3. A system according to claim 1 or claim 2, wherein the means for mounting the display screen comprises a pivot so that the display screen can be tilted when attached to the frame.

4. A system according to claim 3, wherein, when the frame is mounted in the aperture, the means for mounting the frame are accessible only when the display screen is tilted.

5. A system according to claim 3 or claim 4, wherein, when the frame is mounted in the aperture, the means for mounting the display screen are inaccessible when the display screen is tilted.

6. A system according to any preceding claim wherein the frame comprises a border, which extends outwardly from one edge of the frame.

7. A system according to claim 6, wherein the border is of such a size that it covers any exposed regions of the aperture when the frame is mounted in the aperture.

8. A system according to any preceding claim, wherein the display screen is a flat screen.
